# EUROPEAN PATENT APPLICATION

(11) **EP 2 735 232 A1**
(43) Date of publication of application: **28.05.2014**
(21) Application number: 12464025.1
(22) Date of filing: 29.11.2012
(51) Int. Cl.: A01N 65/03, A01N 59/02, C05F 11/00, C05F 17/00, A01P 21/00

(54) **Algal hydrolysat for treatment of crop and process for its production**

(30) Priority: 27.11.2012 RO 201200888
(71) Applicant: SC Soctech SA, 032258 Bucharest (RO)
(72) Inventor: Velea, Sanda, 023783 Bucharest (RO); Oancea, Florin, 062082 Bucharest (RO); Vladulescu, Constantin-Marius, 031551 Bucharest (RO)

(57) **Abstract**

The invention relates to a composition for the treatment of crops, said composition consisting of: a1) 79.3 - 83.4 parts of hydrolysed algae proteins containing 5.9 - 6.3 parts of proline, or in the case of selenium supplementation a2) 55.8 - 58.7 of hydrolysed algae protein containing 4.2 - 4.4 parts of proline and 23.5 - 24.7 parts of hydrolysed algae protein chelated to 1.2 -1.25 parts of selenium; b) 2.0 - 2.1 of total betaines; c) 0.1 parts - 0.11 of parts cytokinins; d) 8.2.- 8.7 parts of carbohydrates; and e) the balance of water; per 100 parts of composition. The invention relates further to the process incorporating following steps: micro-algal biomass lysis with a combination of microbial hydrolases and ultrasonication; concentration of osmoprotectants and phytohormones in the extract by tangential ultrafiltration; hydrolysis of proteins from retentate with proteases; in the case of selenium supplementation chelation of selenium with a part of protein hydrolysate; mixing osmoprotectants and phytohormones concentrate with protein hydrolysate, and in case of selenium supplementation with protein hydrolysate chelated to selenium; and spray-drying of the mixture.

## Description

The present invention refer to a composition for the treatment of agricultural crops, which stimulates plant growth, ameliorates plant resistance to stress, especially to hydric stress, and, in the case of the adding of selenium chelated in amino acids, improves plant response to abiotic stresses and/or biofortifies the harvested edible yield, and to a process for this composition obtainment from micro-algae biomass, with the eventual adding of a compound with selenium.

There are known several compositions, which stimulate plant growth and/or improve the absorption of nutrients for plants and/or improve the plant resistance to stress, and which are obtained from biomass of algae. Many of these compositions, commercially available for more than 60 years, are using marine macro-algae extracts, on which bioassays revealed significant concentrations of phytohormones, and especially of cytokinins (please see, as example, the review done by Craig, 2011, J. Appl. Phycol., 23: 371-393). Patent application WO2009129596 (A1) describes a process for obtainment of an alkaline extract of *Ascophyllum nodosum,* a brown algae from the family *Fucaceae,* common in the North Atlantic. The extracts done in organic solvents, methanol, chloroform and ethyl acetate, proved to be effective in reducing saline stress in cultivated plants, due to the changes in the pattern of expression of genes involved in resistance to saline stress under the action of compounds present in the extract obtained from A. *nodosum.* Patent application WO2005094581 (A1), refers to the use of ulvans, extracted from the green macro-algae, belonging to the genera *Ulva* and *Enteromorpha,* or oligosaccharides derived from ulvans, as activators of the mechanisms of plant nitrogen uptake and protein synthesis. The invention includes a fertilizer that contains ulvans and a method of treating plants.

Micro-algae biomass was also used as a source of biologically active compounds for cultivated plant. Patent JP5021883 (B) disclose an inhibitor of ripening that inhibit the evolution of ethylene in plant organisms, delaying the senescence and ripening, obtained by extraction with an aqueous solvent, at 50 ...150°C for 0.5....120 min, of biomass of microalgae, preferable of the genera *Scenedesmus, Dunaliela* or *Spirulina.* The extract in hot water is separated from the cellular debris by centrifugation and contains a range of compounds, saccharides, proteins, polysaccharides, nucleic acids, which have a molecular mass between 1 and 1000 KDa. US2012094831 Patent Application claims a process wherein are used *Chlorella* cells, and/or fragments of biomass of *Chlorella* obtained through any means, to alter or improve cultivated plant quality, health, fertility, aesthetics appearance or color. The process is illustrated by spraying the turf with *Chlorella* cells, and although are also claimed compositions containing the effective amounts of pigments, colorants, dye components, components, fragments or particles from biomass of *Chlorella,* or any piece of the matter obtainable from *Chlorella* through known means, there is not presented a composition on which are specified the respective amounts considered effective, from the claimed bio-active compounds, which should ensure reproducible effects of the treatments on cultivated agricultural and/or ornamental plants.

Micro-algae biomass contains significant amounts of phytohormones, including cytokinins (Law et al., 2004, J. Phycol. 40: 88-95), as well as osmoprotectants, like glycine betaine (Spielmayer et al., 2011, Mar. Chem., 124: 48-56). The application of treatments with glycine betaine increases plant resistance to abiotic stress, and especially to hydric stress (Chen and Murata, 2008 Trends Plant Sci. 13: 499-505). In the algal biomass accumulates also proteins containing proline, an amino acid that has osmoprotectant action, manifested also in case of application as a treatment of crops (Ashrat and Foola, 2007, Environ. Exp. Bot., 59: 206-216), thus the hydrolysates of proteins from microalgae, due to the presence of proline, have an action which is complementary to other existing osmoprotectants in the biomass of algae extracts. Protein hydrolysates are biostimulant themselves for cultivated agricultural plants (please see, as example, the review done by Maini, 2006, Fertilitas agrorum, 1: 29-43), not only because of the proline, but also of other amino acids, precursors to auxins or to polyamines (polyamines being also involved in plant resistance to abiotic stresses - please see as example, the review done by Alcazar, 2010, Planta, 231: 127-1249). Studies over the past 15 years have shown that selenium, although it is not widely recognized as an essential micro-element for the plants, stimulates the growth of plants (Hartikainen and Xue, 1999, J. Environ. Qual. 33: 1372-1375) and has a significant role in the protection of plants against oxidative stress (Xue et al., 2001, Plant Soil 2: 55-61) and in hydric stress reduction (Wang, 2011, J. Plant Nutr. Soil Sci., 174: 276-282; Wang et al., 2011, J. Plant Growth Regul., 30: 436-444), so the adding of small amounts of selenium should potentiate the stimulating plant growth action and ameliorate the plant stress resistance, especially to water stress combined with the oxidative one (which appear mainly in the case of drought associated with high temperatures). For optimum manifestation of positive interactions between bioactive compounds present in the micro-algae extracts, phytohormones and osmoprotectants, hydrolysates of algae protein containing proline, and selenium as an anti-oxidant micro-element, it is necessary to define compositions on which the different active ingredients should be present in precise ratio and limits, which should ensure application of the doses with reproducible effects in treated crops.

The technical problem which the invention solves consists in obtaining a well characterized composition from micro-algae biomass, with reproducible effects when it is used for crops treatments, in order to stimulate plant growth, to ameliorate plant resistance to stress, especially to hydric stress, and, in the case of supplementation with selenium, also to biofortify the harvested crop by treatments during the crop vegetation.

It is another object of the technical solution to disclose a process wherein to obtain such composition from micro-algae biomass, ensuring the recovery of bioactive ingredients in concentrations well defined. It is a derivative object of the technical solution of obtainment to describe a process by which to ensure, when composition is supplemented with selenium, the formation of chelates of selenium on which selenium is present only in the chelated form.

Composition according to the invention consists of 79.33 ... 83.4 parts of hydrolyzed algal proteins, containing 5.9 ... 6.3 parts proline, or 55.8 ... 58.7 parts of hydrolyzed protein from algae, containing 4.2 ... 4.4 parts proline, and 23.5 ... 24.7 parts of hydrolyzed protein from algae on which is chelated selenium, containing 1.2 ...1.25 parts selenium, in the case of supplementation with chelated selenium, 2.0 ...2.1 parts total betaines, 0.10 ... 0.11 parts cytokinins, equivalents kinetin activity, 8.2 ... 8.7 carbohydrates, water till 100 parts.

The process according to the invention comprises the following steps:
- Biomass separation from culture medium by filtration and cells lysis through a combined treatment, with a mixture of microbial hydrolases and ultrasounds, and removal of cell debris by centrifugation;
- Absorption of chlorophyll pigments from supernatant with activated charcoal and separation by centrifugation of the added activated charcoal;
- Concentration of osmoprotectants and phytohormones in the extract by ultrafiltration on a membrane with an exclusion limit of 1 KDa, till reaching a concentration of about 1 % total betaines in permeate, controlled by determination by high pressure chromatography of glycine betaine, and subsequent verification of cytokinins activity using a bioassay;

- Enzymatic hydrolysis of protein retained in retentate, with a mixture of microbial proteases, endo-proteases and amidopeptidases, until reaching a maximum efficiency in free amino acids and di/tri-peptides and separation through ultrafiltration of amino acids and oligopeptides;
- Concentration by evaporation at reduced pressure of the protein hydrolysate from permeate, up to 10% dry matter, adding of this concentrated hydrolysate over the concentrate of osmoprotectants and phytohormones, and spray drying of the resulting mixture;
- In the case of supplementation of the composition with selenium chelated in amino acids, collection of 30% of hydrolyzed protein concentrate, complexation of amino acids from protein hydrolysate with selenium released gradually from an insoluble compound, in a reaction accelerated through ultrasonication, centrifugation of the excess of insoluble selenium compound and adding of solution with selenium chelated in hydrolyzed protein, together with the remaining 70% of hydrolyzed protein concentrate, over the concentrate of osmoprotectants and phytohormones, and spray-drying the resulting mixture.

The preferred aspects to realize the above process are the followings:
- Obtaining of a wet biomass containing 10% solids by filtration from culture medium and wet biomass lysis with a mixture of lytic enzymes from *Trichoderma harzianum,* which includes β-glucanase, cellulases and proteases, applied at a dose of 0.1 g of enzyme, with the activity of 200 units β-glucan Botrytis per g, for 1 kg of wet biomass and ultrasonication of the mixture with 400 W for a time 45 min. at 45°C, followed by a centrifugation to remove debris at 7000 x g;
- Adding over the supernatant of activated charcoal, in proportion of 4%, for the absorption of chlorophyll pigments, and separation by centrifugation at 5000 x g of the added activated charcoal;
- Hydrolysis of protein material from retentate with a mixture of microbial proteases, 0.1 g endo-proteases, with a specific activity of 2.4 units Anson (AU) per gram and amidopeptidase 0.1 g, with an activity of 500 LAPU/g, added to 1000 ml of retentate, at neutral pH and a temperature of 55...60°C for 16...20 hours, followed by hydrolysate ultrafiltration and removal of molecules with a molecular mass higher than 1 kDa;

- Concentration by evaporation at reduced pressure of the enzyme hydrolysate, up to 10% dry matter, adding of this concentrated hydrolysate over osmoprotectants and phytohormones concentrate, in a ratio of 8 parts of hydrolyzed protein concentrate to 2 parts osmoprotectants and phytohormones concentrate and spray drying of the mixture, at an entrance temperature of 140 ... 145°C and an exit temperature of 80 ... 85 ° C.

In the case of composition supplementation with selenium the process includes the following completions, with the following preferred aspects:
- From the hydrolyzed protein concentrate collect 30%, which add over magnesium selenite hexahydrate, in a ratio of 100 ml hydrolysate to 1.37 g of magnesium selenite hexahydrate, ultrasonicate the mixture with 400 W for 30 min at 55°C, centrifuge excess insoluble selenium compound, add the supernatant with chelated selenium in hydrolyzed protein, together with the remaining 70% of the protein hydrolysate concentrate, over osmoprotectants and phytohormones concentrate, in a ratio of 24 parts of selenium complexed solution to 56 parts concentrated amino acids and 20 parts of osmoprotectants and phytohormones, the resulting mixture being spray-dried at an entrance temperature of 140 ... 145°C and an exit temperature of 80 ... 85 ° C.

The invention presents the following advantages:
- Ensures the reproducibility of the effects on cultivated plants due to a defined composition, with exact ratio between the active ingredients, phytohormones, and especially cytokinins, osmoprotectantants, betaines and proline from algal protein hydrolysate, amino acids precursors of auxins and polyamines from algal protein hydrolysate, eventually also selenium chelated in amino acid, added in the case of supplementation with selenium;
- Stimulates plant growth, due to the contents of phytohormones and amino acid precursors of phytohormones;
- Improve plant resistance to stress, especially to hydric stress, due to osmoprotectants compounds, betaine and proline from algal protein hydrolysate and amino acid precursors of polyamines from the protein hydrolysate;
- Exploit the potential of osmoprotectant compounds from algae by enzyme hydrolysis of algal protein, releasing proline, compound with an osmoprotectant action complementary to the glycine-betaine;
- In the case of selenium supplementation improves the response of plants to hydric stress coupled with the oxidative one and biofortify the edible yield;
- Supplementation with selenium is done with selenium chelated in amino acids, which have a higher bioavailability and a lower toxicity;
- The chelating process, which uses selenium released gradually from an insoluble compound, ensure recovery of selenium exclusively in the chelated form;
- In some situations oligosaccharides formed during the process of cell lysis under the action of lytic enzymes from of *T. harzianum,* concentrated together with phytohormones and osmoprotectants in the first step of ultrafiltration, activates of plant defence systems.

In the following the invention will be described by presenting some examples of realization.

*Example 1*. Micro-algae biomass is separated from the culture medium by filtration. On the resulting sediment the dry matter is determined after drying at 105°C for 4 hours and weighing on an electronic balance. Wet biomass is normalized to 10% (mass/volume) dry matter by the adding of water. A volume of algal biomass of 1 liter, corresponding to 100 g of dry algal matter, is added in a flat-bottom flask of 2500 ml, equipped with reflux condenser, adding funnel and thermoresistance for temperature monitoring. pH is corrected to 4.5 with 6 M HCl solution. Add Glucanex 200 G (Novozyme a/s, Denmark, Bagvaerd), a mixture of lytic enzymes of *Trichoderma harzianum,* which includes β-glucanase, cellulases and proteases, at a dose of 100 mg of enzyme, with an activity of 200 β-glucan Botrytis units per g. A β-glucan Botrytis unit is defined as being the quantity of enzyme which, under standard conditions, at 30.0°C, pH 4.4, for 10 min time of reaction, release 1 mmol of reducing carbohydrate groups (calculated as glucose) per min. Suspension is mixed vigorously with a magnetic stirrer, and heated to 45°C. Remove the adding funnel and insert an ultrasonic probe. The suspension of algae with enzyme is sonicated for a time of 45 min with 400 W at 45°C. After the completion of the sonication cycle, the biomass is quantitatively passed in centrifuge tubes and separate cell lysate from cell debris by centrifugation at 7000 x g. Supernatant is recovered, is measured, is passed into a 2000 ml Erlenmeyer flask, and is added activated charcoal (Darco^{®} G-60, Norit Americas, Marshall, TX, USA), in a proportion of 4%, mass/volume, for absorbing chlorophyll pigments. Mix for 30 min with magnetic stirrer at room temperature and then passes into centrifuge cups and separate by centrifugation at 5000 x g activated charcoal.

The supernatant is recovered and it is tangentially ultrafiltrated on a system of tangential ultrafiltration Prostak (Merck Millipore, Billerica, MA, USA), provided with a membrane Ultracel PLAC (Merck Millipore) from regenerated cellulose, with an exclusion limit of 1 KDa. Osmoprotectants and phytohormones concentration in permeate is continued, till reaching a concentration of 1% (mass/volume) of total betaine in permeate, controlled by determination of betaines by high pressure chromatography. The permeate is sampled periodically and analyzed for betaine content using the method described by MacKinnon et al., 2010, J. Appl. Phycol., 22: 489-494, on Agilent 6224 Accurate Mass TOF LC/MS-MS (Agilent, Santa Clara, CA, USA). Ultrafiltration is stopped upon reaching the levels of concentration of 1% total betaines in permeate. The permeate is checked for its cytokinins content, by using the biotest of *Amaranthus caudatus* cotyledons, proposed by Kubota et al., 1999, J. Plant Physiology, 155: 133-155, using kinetin (Sigma-Aldrich, St. Louis, MO, USA) as standard, and is obtained a value of 50 mg% (mass/volume) kinetin equivalent in concentrate.

Retentate form ultrafiltration is passed on a 2500 ml flat-bottom flask, equipped with reflux condensers, adding funnel and thermoresistance for temperature monitoring. pH is corrected to 7 with 6 M NaOH solution. To 1000 ml retentate is added 0,1 g Alcalase AF 2.4 L (Novozyme), bacterial endopeptidaze from *Bacillus licheniformis,* with subtilisin / serine endo-peptidase as the main component, having specific activity of 2,4 Anson units (AU) per gram and 0.1 g of Flavourzyme 500 MG (Novozyme), a complex of amidopeptidaze/exopeptidaze and endo-proteases obtained from *Aspergillus oryzae,* with an activity of 500 LAPU/g. Anson unit is defined as the amount of enzyme which, in standard conditions, digests hemoglobin with initial rate which produces in a minute a quantity of compounds soluble in trichloroacetic acid which give the same color with the Folin-Ciocâlteu reagent as 1 miliechivalent of tyrosine. A LAPU unit, leucine aminopeptidase unit, is the amount of enzyme which hydrolyzes 1 µmol of added leucine-p-nitroanilide / min. Any type of combination of endoproteases and amidopeptidases/exo-proteases may be used, fulfilling the condition to provide a similar enzyme activity in the mix. The mixture of suspension algal proteins - enzymes is maintained for 16 hours at 60°C, is cooled to 40°C and then is ultrafiltrated through a membrane of 1 kDa, Prostak (Merck Millipore) fitted with a membrane Ultracel PLAC (Merck Millipore) from regenerated cellulose.

To 1 ml ultrafiltrate permeate is added 3 ml of solution 5% trichloroacetic acid (TCA). It does not result a precipitate, and this demonstrates that on permeate are only free amino acids and di/tri-peptides. The permeate is concentrated by evaporation under vacuum till 10% dry matter (determined by refractometry). This concentrated hydrolysate is added over osmoprotectants and phytohormones concentrate, in a ratio of 8 parts of hydrolyzed protein concentrate to 2 parts osmoprotectants and phytohormones concentrate, and the resulting mixture is spray-dried at an entrance temperature of 140 ... 145°C and an exit temperature of 80 ... 85 ° C.

In the resulted dried product is determined the total amino acids with ninhydrin (Lee and Takahashi, 1966, Anal Biochem.14: 71-77), proline (Abraham et al., 2010, R Sunkar ed., Plant Stress Tolerance, Methods in Molecular Biology: 317-331 639, Springer, Berlin) and total carbohydrates with antrone (Hedge and Hofreiter, 1962 in: Whistler R.L. and Be Miller J. B. eds., Carbohydrate Chemistry 17, Academic Press, New York), as well as betaines and cytokinins activity, using the methods already described. The result of the invention application according to this example is a composition consisting of 79.3 ... 83.4 parts hydrolyzed algal protein, containing 5.9 ... 6.3 parts proline, 2.0 ...2.1 parts total betaines, 0.1...0.11 parts cytokinins, kinetin activity equivalents, 8.2....8.7 parts carbohydrate, till 100 parts water.

*Example 2.* Proceed as on example 1 to obtain hydrolyzed protein concentrate. Form this concentrated hydrolyzed protein collect 30%, which is added over magnesium selenite hexahydrate, in a ratio of 100 ml the hydrolysate to 1.37 g of magnesium selenite hexahydrate. Cubic crystals of MgSeO₃ 6H₂O, insoluble in water, are prepared by adding, slowly and gradually, under stirring, 44 ml selenious acid, H₂SeO₃ purity 98%, 3,004 g/ml density, 204 ml of MgCl₂. 6H₂O 10% solution, over 95 ml of Na₂CO₃ 10% solution. The formed precipitate is filtered, is washed on the filter with bi-distilled water until the water conductivity is under 2 µS/cm and is dried on a vacuum oven, at 45°C for 72 hours. From the insoluble compound obtained as described, accurately weight 4.11 g, which are transferred quantitatively in a three necks flask of 1000 ml. Over these 4.11 g add 300 ml of hydrolysate suspension, which is mixed vigorously with a magnetic stirrer and heated to 45°C. Remove the adding funnel and insert an ultrasonic probe. The hydrolysate and magnesium selenite hexahydrate are sonicated for 60 min at 400 W. Due to the use of insoluble compound the risk of Se⁺⁴ to be reduced to elemental selenium Se⁰, insoluble and without bio-availability, is very low. The lack of formation of specific selenium Se⁰ red color, during complexation reaction, is an evidence of non-forming of elemental selenium. After completion of the reaction excess of selenium-insoluble compound is separated by centrifugation at 5000 x g. The supernatant with selenium chelated in protein hydrolysate is added together with the remaining 70% of hydrolyzed concentrate, over the concentrate of osmoprotectants and phytohormones, in a ratio of 24 parts selenium chelated solution to 56 parts concentrated amino acids and 20 parts of osmoprotectants and phytohormones, the resulted mixture is spray-dried at an entrance temperature of 140 ... 145 ° C and at an exit temperature of 80 ... 85 ° C.

In the dry end product are determined total amino acids, proline, carbohydrate, betaines and activity of cytokinins, using the methods already described. Supplementary, it is determined also selenium, by hydride generation atomic absorption spectrophotometry (Tinggi et al., 1992, J. Food Comp Anal., 267-280). The resulted composition consists of 55.8 ... 58.7 parts hydrolyzed algae protein, containing 4.2 .. 4.4 parts of proline, and 23.5...24.7 parts of hydrolyzed algal protein parts on which is chelated selenium, containing 1.2 ...1.25 parts selenium, 2.0 ... 2.1 total betaines, 0.1 parts ... 0.11 parts cytokinins, kinetin activity equivalents, 8.2 ... 8.7 parts carbohydrates, till 100 parts water.

*Example* 3. Compositions according to Ex. 1 and Ex. 2 were tested in the greenhouse condition, on tomatoes plant. Plants of tomatoes *(Lycopersicum esculentum* cv. Cristal F1), 60 days transplants, were re-potted into pots of 25 cm diameter and 50 cm height, in which were introduced 5 liters of growth substrate enriched with plant nutrients for the first weeks of growth (Canna Terra Professional Plus, Canna International BV, Oosterhout, Netherlands). Pots were kept in a greenhouse, at 22 ± 2°C during the day and 17± 2°C during the night, with 12 hours photoperiod, supplemented with light intensity of 160 mcE/m²/s, derived from the halide lamps, when light intensity decreased below 500 mcE/m² threshold. Experiment was runned for 56 days. The substrate contained reserves of nutrients, so the plants were fertilized only once, after 28 days from re-potting, by applying 100 ml of nutrient solution, 1 g/I of fertilizer 20-8-20 (N-P₂O₅-K₂O TimacAgro Eurofertil, Romania). The experiment was conducted in a randomized blocks with 4 repetitions for each treatment, every repetition including five plants. Tested experimental treatments included control, treated with water, hydric stressed and not-stressed, and one standard product, Maxicrop Original (MaxiCrop, Corby, United Kingdom), containing 8% dry matter extracted from *Ascophyllum nodosum.* These experimental treatments were:
V₁ - control, hydric not-stressed, treated with water; 2 treatments x 2 ml per 100 l equivalent plant/ha;
V₂ - control, hydric stressed, treated with water, 2 treatments x 2 ml per 100 I equivalent plant/ha;
V₃ - hydric not-stressed, treated with the Maxicrop Original 2 treatments x 2 ml solution of 0.48% per plant, equiv. 6 liters with 8% dry matter in 100 l/ha;
V₄ - hydric stressed, treated with the Original Maxicrop 2 treatments x 2 ml solution of 0.48% per plant, equiv. 6 liters with 8% dry matter in 100 l/ha;
V₅ - hydric not-stressed, treated with product according Ex. 1, 2 treatments x 2 ml of 0.5% solution per plant, equivalent to 0.5 kg in 100 l/ha
V₆ - hydric stressed, treated with the product according Ex. 1, 2 treatments x 2 ml of 0.5% solution per plant, equivalent to 0.5 kg in 100 l/ha;
V₇ - hydric not-stressed, treated with product according Ex. 2, 2 treatments x 2 ml of 0.5% solution per plant, equivalent to 0.5 kg in 100 l/ha
V₈ - hydric stressed, treated with the product according Ex. 2, 2 treatments x 2 ml of 0.5% solution per plant, equivalent to 0.5 kg in 100 l/ha.

The treatments were applied in 2^{nd} and 29^{th} days after re-potting, by spraying each plant with a glass atomizer with metal top and plastisol bulb (model 15-RD, DeVilbiss Healthcare, Somerset, PA, USA). Control hydric not-stressed was watered once every five days at 100% field capacity, and hydric stressed treatments were watered every two weeks at 100% field capacity. At the end of the 8 weeks since transplants re-potting, the experiment was terminated, and the morphological parameters of plants, plant height, root length, number of leaves and the leaf surface, and ripe fruits per plant, were determined. In the harvested tomatoes selenium was assayed, by hydride generation atomic absorption spectrophotometry (Tinggi et al., 1992, J. Food Comp Anal., 267-280). The data were processed by analysis of variance (Statistica 10, StatSoft, Tulsa, OK, USA).

The results are presented in the below table 1. Compositions according to invention stimulate the growth of the plants and improve the tomatoes plants resistance to hydric stress.

**Tab. 1. Influence of treatments with compositions made in accordance with the invention of the tomatoes plants, hydric stressed and hydric not-stressed*.**

| Experimental version | Plant height (cm) | Root length (cm) | Leaf number | Leaf area (mm^{z}) | Average production * (g/plant ripe fruit) | The average content of selenium (mcg/kg f.w..) |
|---|---|---|---|---|---|---|
| V₁ control, hydric not-stressed, treated with water | 58.15±1.74b | 56.42±0.84b | 32.00±5.2b | 679.47±6.12b | 325±42.4b | 0.29±0.06c |
| V₂ control hydric stress, treated with water | 44.02±3.64c | 38.75±3.12c | 25.50±2.2c | 537.50±2.92c | 192±32.6c | 0.44±0.06b |
| V₃ hydric not-stressed, Maxicrop Original 2 x 2 ml 0.48%, equiv. 6 liter 8% d.w. in 100 l/ha | 64.30±3.42a | 55.50±2.39b | 34.00±2.1 b | 68₇.58±2.92ab | 383±28.2a | 0.37±0.07b |
| V₄ hydric stressed, treated with the Original Maxicrop 2 x 2 ml 0.48%, equiv. 6 liters. 8% d.w. in 100 l/ha | 56.50±2.89b | 54.20±1.93b | 33.20±3.8b | 673.16±5.84ab | 312±38.6b | 0.38±0.04b |
| V₅ hydric not-stressed, product according Ex. 1, 2 x 2 ml of 0.5%, equiv. 0.5 kg in 100 l/ha | 65.25±1.49a | 59.25±1.22a | 47.50±4.4a | 719.21±4.59a | 374±22.4a | 0.32±0.05bc |
| V₆ hydric stressed, product according Ex. 1, 2 x 2 ml of 0.5%, equiv. to 0.5 kg in 100 l/ha | 54.50±4.64b | 55.20±1.82b | 34.01±2.6b | 672.16±8.24b | 309±35.6b | 0.36±0.06b |
| V₇ hydric not-stressed, product according Ex. 2, 2 x 2 ml of 0.5%, equiv. to 0.5 kg in 100 l/ha | 67.52±3.49a | 58.85±1.34a | 47.50±4.6a | 719.21±4.59a | 394±30.9a | 0.55±0.04a |
| V₈ hydric stressed, product according Ex. 2, 2 x 2 ml of 0.5%, equiv. to 0.5 kg in 100 l/ha | 54.50±4.64b | 54.60±2.12b | 35.20±2.4b | 681.16±7.42b | 318±25.6b | 0.59±0.06b |

| | | | | | | |
|---|---|---|---|---|---|---|
| * The values are followed by the same letter does not differ significantly P > 0.05; ** production per 30 day cycle of flowering / fructification | | | | | | |

Composition according to Ex. 1 has an activity at the level of a commercial product used as standard, and adding of selenium improves plant response to hydric stress, probably due to a better anti-oxidant protection. The level of selenium in the edible yield of the plants treated by applying a solution of 0.5% composition with selenium, equivalent to a dose of 0.5 kg of composition with the adding of selenium, respectively to 6.0... 6.75 g/ha, applied in a spraying norm of 100 l/ha, significantly increases, but does not influence significantly the contribution of the consumption of biofortied tomatoes in the daily intake of selenium, which is 50 mcg/day for women and 70 mcg/day for men.

## Claims

1. Composition in accordance to the invention **characterized in that** consists of 79.3 ... 83.4 parts hydrolyzed algae protein, containing 5.9 ... 6.3 parts, proline, or, respectively, 55.8... 58.7 hydrolyzed algae protein containing 4.2 ... 4.4 parts proline and 23.5... 24.7 parts hydrolyzed algae protein on which is chelated selenium, containing 1.2 ...1.25 parts selenium, in the case of selenium supplementation, 2.0 ...2.1 total betaines, 0.1 parts ...0.11 parts cytokinins, kinetin activity equivalents, 8.2. 8.7 parts carbohydrates, till 100 parts water.

2. Process according to the invention **characterized in that** comprises the following steps: biomass separation from culture medium by filtration and cells lysis through a combined treatment, with a mixture of microbial hydrolases and ultrasonication, and removal of cell debris by centrifugation; absorption of chlorophyll pigments from supernatant with activated charcoal and separation by centrifugation of the added activated charcoal; concentration of osmoprotectants and phytohormones in the extract by ultrafiltration on a membrane with an exclusion limit of 1 KDa, till reaching a concentration of about 1 % total betaines in permeate, controlled by determination by high pressure chromatography of glycine betaine, and subsequent verification of cytokinins activity using a bioassay; enzymatic hydrolysis of protein retained in retentate, with a mixture of microbial proteases, endo-proteases and amidopeptidases, until reaching a maximum efficiency in free amino acids and di/tri-peptides and separation through ultrafiltration of amino acids and oligopeptides; concentration by evaporation at reduced pressure of protein hydrolysate from permeate, up to 10% dry matter, adding of this concentrated hydrolysate over the concentrate of osmoprotectants and phytohormones, and spray drying of the resulting mixture; in the case of supplementation of the composition with selenium chelated in amino acids, collection of 30% of hydrolyzed protein concentrate, complexation of amino acids from hydrolyzed with selenium released gradually from an insoluble compound, in a reaction accelerated through ultrasonication, centrifugation of the excess of insoluble selenium compound and adding of solution with selenium chelated in hydrolyzed protein, together with the remaining 70% of hydrolyzed protein concentrate, over the concentrate of osmoprotectants and phytohormones, and spray-drying the resulting mixture.

3. Process according to claim 2 **characterized in that** the step of wet biomass lysis is done with a mixture of lytic enzymes from *Trichoderma harzianum,* which includes β-glucanase, cellulases and proteases, applied at a dose of 0.1 g of enzyme, with the activity of 200 units β-glucan Botrytis per g, for 1 kg of wet biomass, and ultrasonication of the mixture with 400 W for a time 45 min at 45°C, followed by a centrifugation to remove debris at 7000 x g;

4. Process according to claim 2 **characterized in that** the step of hydrolysis of protein material from retentate is done with a mixture of microbial proteases, 0.1 g endo-proteases, with a specific activity of 2.4 units Anson, AU, per gram and amidopeptidase 0.1 g, with an activity of 500 LAPU/g, added to 1000 ml of retentate, at neutral pH and a temperature of 55...60°C for 16...20 hours, followed by hydrolysate ultrafiltration and removal of molecules with a molecular mass higher than 1 kDa;

5. Process according to claim 2 **characterized in that** the step of adding of the concentrated hydrolysate over osmoprotectants and phytohormones concentrate, is done in a ratio of 8 parts of hydrolyzed protein concentrate to 2 parts osmoprotectants and phytohormones concentrate and it is followed by spray drying of the mixture, at an entrance temperature of 140 ... 145°C and an exit temperature of 80 ... 85 ° C.

6. Process according to claim 2 **characterized in that** the step of eventual composition supplementation with selenium is done by collection of 30%, from the hydrolyzed protein concentrate, which is added over magnesium selenite hexahydrate, in a ratio of 100 ml hydrolysate to 1.37 g of magnesium selenite hexahydrate, ultrasonication of the mixture with 400 W for 30 min at 55°C, centrifugation of the excess insoluble selenium compound, followed by adding of the supernatant with chelated selenium in hydrolyzed protein together with the remaining 70% of the protein hydrolysate concentrate, over osmoprotectants and phytohormones concentrate, in a ratio of 24 parts of selenium complexed solution to 56 parts concentrated amino acids and 20 parts of osmoprotectants and phytohormones, the mixture is spray-dried at an entrance temperature of 140 ... 145°C and an exit temperature of 80 ... 85 ° C.
